# EUROPÄISCHE PATENTSCHRIFT

(11) **EP 1 679 173 B1**
(45) Veröffentlichungstag und Bekanntmachung des Hinweises auf die Patenterteilung: **15.10.2008**
(21) Anmeldenummer: 06405001.6
(22) Anmeldetag: 04.01.2006
(51) Int. Cl.: B29C 45/26, B29L 17/00

(54) **Spritzgusswerkzeug für die Herstellung von scheibenförmigen Informationsträgern**
Injection mold for producing disk-shaped information carriers
Moule d'injection pour la fabrication de supports d'information en forme de disque

(30) Priorität: 06.01.2005 CH 182005
(43) Veröffentlichungstag der Anmeldung: 12.07.2006
(73) Patentinhaber: AWM Mold Tech AG, 5630 Muri (CH)
(72) Erfinder: Gabriel, Markus, 5022 Rombach (CH)
(74) Vertreter: Bremi, Tobias Hans

(56) Entgegenhaltungen:
- US-A1- 2002 031 570
- PATENT ABSTRACTS OF JAPAN Bd. 2000, Nr. 05, 14. September 2000 (2000-09-14) -& JP 2000 048416 A (HITACHI MAXELL LTD), 18. Februar 2000 (2000-02-18)

## Beschreibung

### TECHNISCHES GEBIET

Die vorliegende Erfindung bezieht sich auf das Gebiet der Spritzgusstechnik. Sie betrifft insbesondere ein Spritzgusswerkzeug für die Herstellung von scheibenförmigen Informationsträgern wie CDs, DVDs o.ä.. Ein derartiges Spritzgusswerkzeug umfasst zur Bildung einer Kavität eine erste und eine zweite Spiegelplatte, die einander gegenüberliegen und zum Oeffnen und Schliessen der Form relativ zueinander beweglich sind, sowie einen Formring, welcher die erste Spiegelplatte konzentrisch umschliesst und die Kavität zum äusseren Rand hin abschliesst und relativ zur ersten Spiegelplatte beweglich ist. Dabei sind zwischen der ersten Spiegelplatte und dem sie umschliessenden Formring Mittel zur Verringerung der Reibung bei einer Bewegung des Formringes relativ zur ersten Spiegelplatte vorgesehen.

### STAND DER TECHNIK

Zur Herstellung von optisch lesbaren Informationsträgern wie Audio-CDs, CD-ROMs, Video-CDs oder DVDs werden Spritzgusswerkzeuge eingesetzt, die mittels zweier gegenüberliegender, relativ zueinander beweglicher Spiegelplatten eine Kavität (Hohlraum der Spritzgussform) bilden. Auf einer der beiden Spiegelplatten ist üblicherweise ein dünner, scheibenförmiger Stamper lösbar befestigt, der beim Spritzgiessen des sich formenden Informationsträgers die die Information enthaltenden Spuren einprägt. Am Aussenrand wird die Kavität häufig durch einen Formring (venting ring) begrenzt, der die eine Spiegelplatte konzentrisch umgibt.

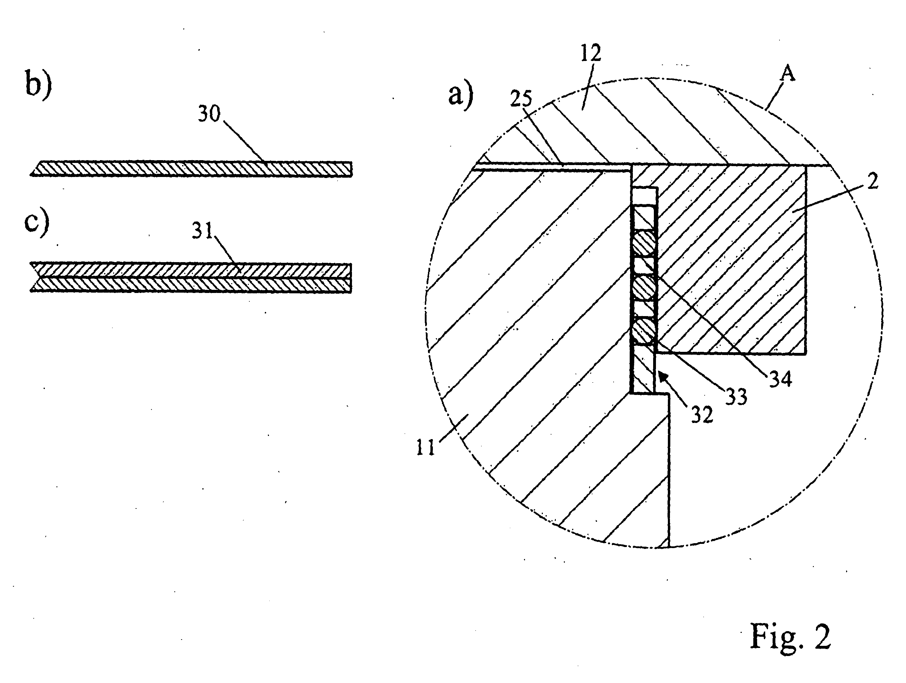

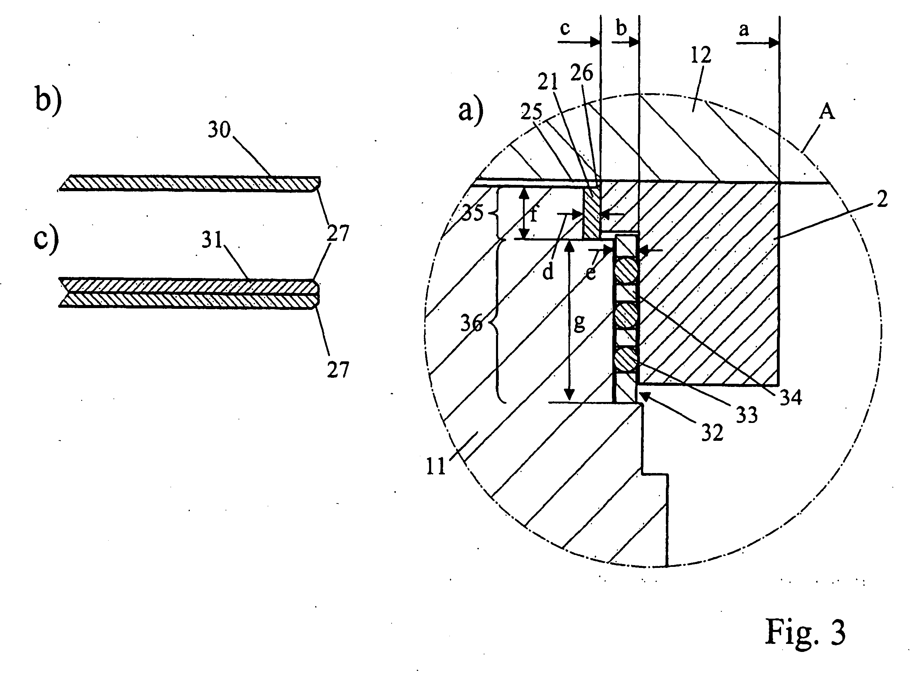

Der Formring steht über die ebene Formfläche der von ihm umschlossenen Spiegelplatte über und ist relativ zu dieser Spiegelplatte in axialer Richtung verschiebbar. Wird die Kavität durch eine axiale Bewegung der beiden Spiegelplatten aufeinander zu geschlossen, setzt aufgrund des Ueberstandes der Formring auf der gegenüberliegenden Spiegelplatte auf und schliesst die Form, während die von ihm konzentrisch umschlossene Spiegelplatte von der gegenüberliegenden Spiegelplatte einen vorbestimmten Abstand hat. In den so gebildeten scheibenförmigen Hohlraum wird dann unter hohem Druck der heisse Kunststoff eingespritzt. Nachdem die Kavität gefüllt ist, wird - um eine hohe Qualität des Informationsträgers zu erreichen - die vom Formring umschlossene Spiegelplatte ein Stück weit auf die andere Spiegelplatte zubewegt, während der Formring ortsfest bleibt (siehe dazu z.B. Fig. 2 und 3 der WO-A1-99/37471).

Die in dieser Phase des Herstellungsprozesses stattfindende Relativbewegung zwischen der Spiegelplatte und dem sie umschliessenden Formring wirft jedoch aus folgenden Gründen Probleme auf: Damit der Formring bei der Relativbewegung frei über die Spiegelplatte gleiten kann, ist eine bestimmte Passung notwendig. Ist diese Passung zu weit, kann beim Einspritzen Kunststoff in den Spalt dringen und bildet an der geformten Informationsträger-Scheibe einen unerwünschten Grat. Ist die Passung dagegen zu eng, kann es, insbesondere wenn sich Spiegelplatte und Formring auf unterschiedlichen Temperaturen befinden, zu hohen Reibungswerten kommen, welche die Relativbewegung behindern und - weil beide Teile in der Regel aus Stahl sind - möglicherweise zu einem Festfressen oder Klemmen des Formringes auf der Spiegelplatte führen.

Um bei relativ enger Passung eine geringe Gleitreibung zwischen Spiegelplatte und Formring zu gewährleisten, ist in der genannten WO-A1-99/37471 bereits vorgeschlagen worden, die aufeinander gleitenden Flächen der Spiegelplatte und des Formringes mit einer speziellen Beschichtung zu versehen, welche die Reibung herabsetzt. Nachteilig ist hierbei jedoch, dass die Beschichtung der Teile mit einem hohen Aufwand verbunden ist, und dass eine Beschichtung generell die Wärmeabfuhr aus der Kavität beeinflusst.

In der EP-A1-0 899 075 ist zur Sicherstellung einer guten Relativbeweglichkeit zwischen einer Spiegelplatte und einem die Spiegelplatte konzentrisch umschliessenden Ring ein lineares Kugellager (75 in Fig. 5) zwischen den beiden Teilen vorgesehen. Der Ring ist hierbei jedoch kein Formring, der einen Teil der Begrenzung der Kavität bildet, sondern ist ein Führungsring, der die Zentrierung der beiden Spiegelplatten zueinander unterstützt.

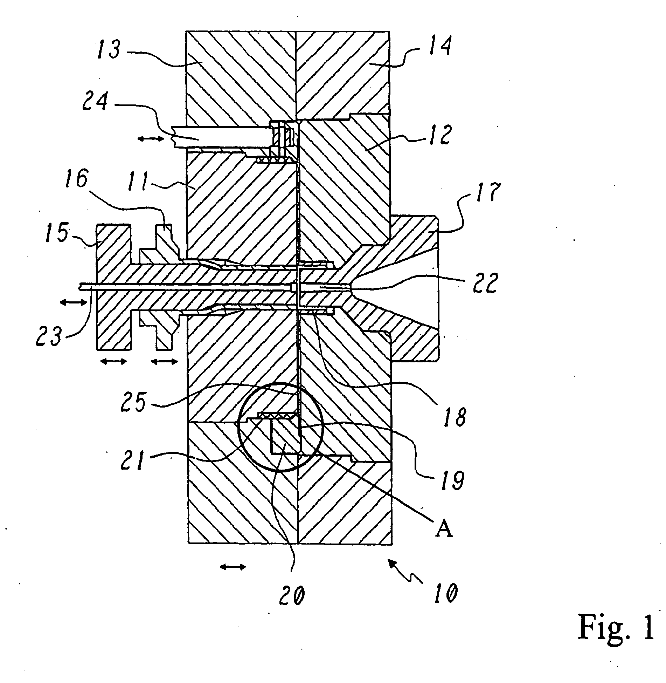

In der US-A-5,018,962 ist ein zwei Spiegelplatten und einen Formring umfassendes Spritzgusswerkzeug für die Herstellung von CDs offenbart, bei dem zwischen dem Formring und der einen Spiegelplatte ein konzentrischer Haltering (15 in Fig. 1) für den auf dieser Spiegelplatte sitzenden Stamper vorgesehen ist. Der Formring gleitet beim Oeffnen und Schliessen über beide Spiegelplatten. Spezielle Vorkehrungen zur Reduzierung der Reibung bei diesen Gleitvorgängen sind jedoch nicht getroffen.

In der DE-A1-44 10 015 wird die Möglichkeit beschrieben, zwischen Formring und der davon umschlossenen Spiegelplatte ein Lager vorzusehen (61 in Figur 1). Wie dieses Lager beschaffen ist, wird in diesem Dokument nicht offenbart, es heisst einzig, dass es sich um ein zylindrisches "Lager" handelt, welches offenbar die relative Beweglichkeit zwischen einer bewegbaren Formhälfte 52 (entspricht einer Spiegelplatte) und einem schwimmenden Element 58 (entspricht offenbar einem Formring) erleichtern soll. Dieses "Lager" ist in einem der Kavität abgewandten Bereich angeordnet, und das schwimmende Element ist im Grenzbereich zur Kavität in direktem Kontakt zur bewegbaren Formhälfte.

In der EP-A1-1 120 221 schliesslich wird die Möglichkeit beschrieben, zwischen einer Spiegelplatte und einem diese Spiegelplatte konzentrisch umschliessenden Formring einen konzentrisch zwischen der Spiegelplatte und dem sie umschliessenden Formring angeordneten Gleitring vorzusehen, um die direkte Reibung zwischen der Spiegelplatte und dem Formring zu verhindern.

### DARSTELLUNG DER ERFINDUNG

Der Erfindung liegt demnach die Aufgabe zugrunde, ein verbessertes Spritzgusswerkzeug für CDs oder DVDs zur Verfügung zu stellen. Insbesondere geht es darum, ein Spritzgusswerkzeug zu verbessern, welches zur Bildung einer Kavität eine erste und eine zweite Spiegelplatte umfasst, die einander gegenüberliegen und zum Oeffnen und Schliessen der Form relativ zueinander beweglich sind, sowie einen Formring, welcher die erste Spiegelplatte konzentrisch umschliesst und die Kavität zum äusseren Rand hin abschliesst und relativ zur ersten Spiegelplatte beweglich ist. Dabei sind zwischen der ersten Spiegelplatte und dem sie umschliessenden Formring Mittel zur Verringerung der Reibung bei einer Bewegung des Formringes relativ zur ersten Spiegelplatte vorgesehen.

Die Lösung dieser Aufgabe wird dadurch erreicht, dass die Mittel zur Verringerung der Reibung bei einer Bewegung des Formringes relativ zur ersten Spiegelplatte einerseits wenigstens einen konzentrisch zwischen der ersten Spiegelplatte und dem sie umschliessenden Formring angeordneten Gleitring sowie andererseits wenigstens ein weiteres konzentrisch zwischen der ersten Spiegelplatte und dem sie umschliessenden Formring angeordnetes Lager umfassen.

Der Kern der Erfindung besteht somit darin, zwei unterschiedliche Mittel zur Verringerung der Reibung bei einer Bewegung des Formringes relativ zur ersten Spiegelplatte vorzusehen. Dies wird vom Fachmann zunächst nicht in Betracht gezogen, da die Platzverhältnisse bei solchen Spritzgussformen äusserst beschränkt sind und da ausserdem in Bezug auf Wartung sowie in Bezug auf Produktionskosten die Anzahl einzelner Komponenten, insbesondere einzelner beweglicher Komponenten, stets auf einem Minimum gehalten werden sollte.

Es zeigt sich nun aber überraschenderweise, dass die Kombination eines Formringes mit einem weiteren Lager, wobei diese beiden in axialer Richtung der Kavität hintereinander angeordnet sind, äusserst vorteilhafte synergistische Wirkung nach sich zieht.

So kann einerseits ein Gleitring, welcher genaue und präzise Grenzübergänge zwischen sowohl der Spiegelplatte und dem Gleitring als auch zwischen dem Formring und dem Gleitring gewährleisten kann, aufgrund der damit verbundenen niedrigen Toleranzen der Radien nur schwierig montiert werden (leicht Kantenabnutzung/-verletzung bei Montage), und der Gleitring ist, sofern er die gesamte Führungsaufgabe zwischen Formring und Spiegelplatte übernehmen soll, häufig überfordert, was zu einer schnelleren Abnutzung und damit einem erhöhten Wartungsaufwand führen kann. Soll sich ein Gleitring bei der Relativbewegung von Formring und Spiegelplatte nicht festbeissen, ist ein gewisses Spiel immer notwendig, auf der anderen Seite ist dieses Spiel nachteilig in Bezug auf präzise Grenzübergänge.

Andererseits ist ein konventionelles Lager, beispielsweise in Form eines Kugellagers respektive eines Kugelkäfigs im Hinblick auf die Führungsaufgabe nahezu optimal, weil es im wesentlichen spielfreie Führung gewährleistet, und es ist über lange Zeiten und grosse Hübe belastbar, andererseits liegt es in der Natur eines solchen Lagers, typischerweise eher grössere Spaltbreiten bei den Grenzübergängen zwischen Spiegelplatte und Formring erforderlich zu machen denn ein solches Lager kann nicht zur Begrenzung des Hohlraumes verwendet werden, ohne dass wesentliche Gratbildung auftritt.

Die an sich konstruktiv aufwändigere Kombination der beiden Elemente Gleitring und Lager kombiniert nun die Vorteile des jeweiligen Elementes und kann bei geeigneter Auslegung und relativer Orientierung der beiden Elemente die jeweiligen individuellen Nachteile so gut wie vollständig eliminieren.

Entsprechend wird gemäss einer ersten bevorzugten Ausführungsform des Spritzgusswerkzeuges gemäss der Erfindung der Gleitring in einem an die Kavität angrenzenden Bereich angeordnet, dort nämlich, wo die geringen Spaltbreiten, welche bei einem Gleitring möglich sind, besonders notwendig sind, und wo die Möglichkeiten der Konturierung des Randbereiches des Formlinges eröffnet werden können. Andererseits wird das weitere Lager in einem axial von der Kavität abgewandten und nicht an die Kavität angrenzenden Bereich angeordnet, und kann dort einen wesentlichen Teil oder nahezu die gesamte Führungsaufgabe zwischen Formring und Spiegelplatte übernehmen und somit gewissermassen in Bezug auf die Führung den Gleitring wenigstens teilweise entlasten. Ein Gleitring kann dann noch präziser geometrisch eingepasst werden, da eine spielfreie Führung vom weiteren Lager gewährleistet wird und ein Festbeissen des Gleitringes verunmöglicht wird.

Weiterhin ergibt sich der Vorteil, dass bei einer Montage des Formringes auf die Spiegelplatte von der Seite der Kavität zunächst das weitere Lager, welches typischerweise ein etwas grösseres Spiel in Bezug auf den Durchmesser aufweist, eingeführt wird, dieses weitere Lager übernimmt dann die Führungsfunktion beim weiteren Aufschieben auf die Spiegelplatte, und stellt somit sicher, dass im Moment des Ansetzens und Umgreifens des Gleitringes um die Spiegelplatte respektive des Formringes um den Gleitring bereits eine perfekte relative Orientierung von Gleitring und Formring respektive Spiegelplatte vorliegt. So können Beschädigungen in den Kantenbereichen, welche letzten Endes zu schlechten Spritzgussformen führen, bei der Montage so gut wie vollständig vermieden werden.

In diesem Zusammenhang erweist es sich gemäss einer weiteren bevorzugten Ausführungsform als vorteilhaft, Gleitring und weiteres Lager radial versetzt anzuordnen. Insbesondere erweist es sich als hinsichtlich Montage ideal, wenn die erste Spiegelplatte einen ersten, der Kavität zugewandten axialen Abschnitt mit einem ersten Radius, und einen zweiten, der Kavität abgewandten axialen Abschnitt mit einem zweiten Radius aufweist, und der erste Radius kleiner gestaltet wird als der zweite Radius. Der Gleitring ist dabei um den ersten axialen Abschnitt angeordnet und das weitere Lager um den zweiten axialen Abschnitt herum. Durch den grösseren zweiten Radius des Abschnittes, in welchem das weitere Lager angeordnet ist, wird sichergestellt, dass beim Aufsetzen des Formringes die der Kavität zugewandte, kreisförmig umlaufende Aussenkante der ebenen Fläche der Spiegelplatte (respektive die Aussenkante des Gleitringes, wenn dieser auf der Spiegelplatte aufgesetzt ist), welche dem Stamper entgegengesetzt ist, nicht verletzt wird. Dies, da nämlich der Radius dieser Aussenkante geringer ist als der grössere zweite Radius und somit beim Aufsetzen genügend Spiel vorhanden ist, und die genaue Passform zwischen Gleitring und dieser Aussenkante (respektive zwischen Gleitring und Formring) erst dann eingeführt wird, wenn das weitere Lager bereits eine Führung zwischen Formring und erster Spiegelplatte gewährleistet.

Eine weitere bevorzugte Ausführungsform ist dadurch gekennzeichnet, dass der Gleitring einen äusseren Durchmesser aufweist, welcher im wesentlichen dem Aussendurchmesser der Kavität, wie er durch den Innendurchmesser des Formringes definiert ist, entspricht, und dass die Dicke (in radialer Richtung) des Gleitringes geringer ist als die Differenz zwischen dem ersten Radius und dem zweiten Radius. Vorzugsweise hat der Gleitring eine Dicke im Bereich von 0.25-2 mm, bevorzugt von 0.35-1 mm. Weiterhin vorzugsweise ist die Differenz (im Absolutwert) zwischen dem ersten Radius und dem zweiten Radius im Bereich von 0.5-10 mm, bevorzugt im Bereich von 1-7.5 mm.

Diese absoluten Masse (sowie auch die weiter unten angegebenen absoluten Masse) beziehen sich auf die Verhältnisse bei der Herstellung von CDs respektive DVDs, das heisst bei Formlingen mit einem Aussendurchmesser von 80-130 mm und einer Dicke im Bereich von circa 0.3-2 mm.

Um insbesondere bei der Montage des Formringes ideale Verhältnisse gewährleisten zu können, erweist es sich als vorteilhaft, wenn der erste axiale Abschnitt eine Höhe (in axialer Richtung) aufweist, welche geringer ist als die Höhe des zweiten axialen Abschnitts in axialer Richtung. Beispielsweise kann der erste axiale Abschnitt eine Höhe (in axialer Richtung) im Bereich von 2.5-15mm, bevorzugt im Bereich von 5-10 mm aufweisen. Der zweite axiale Abschnitt kann eine Höhe (in axialer Richtung) im Bereich von 10-30 mm, bevorzugt im Bereich von 15-20 mm aufweisen.

Gemäss einer bevorzugten Ausführungsform handelt es sich wie erwähnt beim weiteren Lager um ein Wälzlager, wobei Tonnenlager, Rollenlager oder Kugellager verwendet werden können, letztere insbesondere bevorzugt bestehend aus einem Kugelkäfig mit darin gelagerten Kugeln. Dieses weitere Lager verfügt vorteilhafterweise über eine Dicke im Bereich von 1-5mm, bevorzugt im Bereich von 1.5-3 mm.

Hinsichtlich des Gleitringes erweist es sich als vorteilhaft, diesen aus einem die Gleitreibung herabsetzenden Material (welches ggf. auch eine gute Wärmeleitfähigkeit aufweist) zu fertigen, insbesondere bevorzugt aus Kupfer, einer Kupferlegierung wie Bronze oder auch aus einem Kunststoffmaterial wie Teflon. Das gleiche kann unter Umständen für den Kugelkäfig des weiteren Lagers vorteilhaft sein.

Die erste Spiegelplatte begrenzt die Kavität vorteilhafterweise mit einer im wesentlichen ebenen Fläche, und der Gleitring schliesst mit seiner der Kavität zugewandten Stirnseite bündig an die ebene Fläche der ersten Spiegelplatte an und vergrössert diese nach aussen hin. Es sind aber insbesondere auch spezielle Randausformungen des Formlinges möglich, so beispielsweise indem der Gleitring an seiner der Kavität zugewandten Stirnseite eine Anschrägung aufweist, derart, dass der in der Kavität hergestellte Informationsträger an seiner Aussenkante eine Anphasung aufweist, und/oder indem der Gleitring an seiner der Kavität zugewandten Stirnseite eine umlaufende Vertiefung aufweist, derart, dass der in der Kavität hergestellte Informationsträger an seiner Aussenkante einen erhöhten, ringförmigen Kratzschutz aufweist. Typischerweise sitzt der Gleitring sowie das weitere Lager auf der ersten Spiegelplatte. Der Gleitring und/oder das weitere Lager können mit einer reibungsvermindernden Beschichtung versehen sein.

Weitere bevorzugte Ausführungsformen sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: in einem Längsschnitt ein Spritzgusswerkzeug nach dem Stand der Technik ausschliesslich mit Gleitring in einer vereinfachten Darstellung;
- Fig. 2 a): in einem Längsschnitt einen Ausschnitt gem. Kreis A in Fig. 1 eines Spritzgusswerkzeuges, nach dem Stand der Technik, mit Lager in einer vereinfachten Darstellung, b) Schnittdarstellung einer in einer solchen Form hergestellten CD, c) Schnittdarstellung einer in einer solchen Form hergestellten DVD;
- Fig. 3: a) in einem Längsschnitt einen Ausschnitt gem. Kreis A in Fig. 1 eines Spritzgusswerkzeuges gemäss der Erfindung in einer vereinfachten Darstellung, b) Schnittdarstellung einer in einer solchen Form hergestellten CD, c) Schnittdarstellung einer in einer solchen Form hergestellten DVD; und

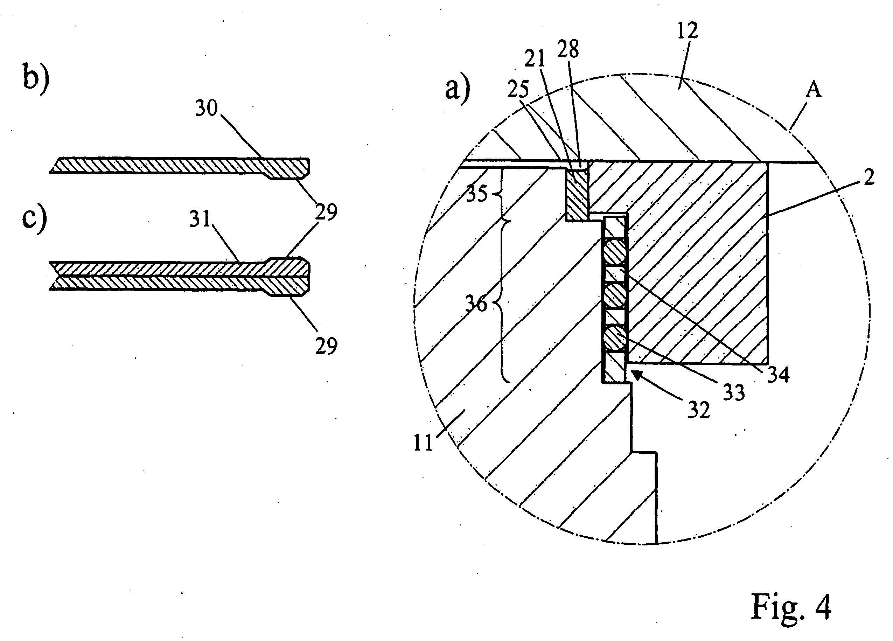

- Fig. 4: a) in einem Längsschnitt einen Ausschnitt gem. Kreis A in Fig. 1 eines weiteren Spritzgusswerkzeuges gemäss der Erfindung in einer vereinfachten Darstellung, b) Schnittdarstellung einer in einer solchen Form hergestellten CD, c) Schnittdarstellung einer in einer solchen Form hergestellten DVD.

### WEGE ZUR AUSFÜHRUNG DER ERFINDUNG

In Fig. 1 ist in einem Längsschnitt ein Spritzgusswerkzeug nach dem Stand der Technik, wie er beispielsweise in der EP-A1-1 120 221 festgehalten ist, wiedergegeben. Die Figur ist dabei insoweit vereinfacht, als auf die Darstellung der notwendigen Verschraubungen, Federn, Dichtungen und Bedienelemente verzichtet worden ist.

Das im geschlossenen Zustand gezeigte Spritzgusswerkzeug 10 umfasst als zentrale Bestandteile eine erste (linke) Spiegelplatte 11, eine zweite (rechte) Spiegelplatte 12 und einen die erste Spiegelplatte 11 konzentrisch umschliessenden Formring (venting ring) 20, die zusammen die Kavität 25 bilden. Die Spiegelplatten 11, 12 sind jeweils in einen sie konzentrisch umgebenden Zentrierring 13 bzw. 14 eingepasst. Die Information wird beim Spritzen in das Spritzgussteil (die CD/DVD) mittels eines Stampers 19 eingeprägt, der als dünne Scheibe an der Formfläche der zweiten Spiegelplatte 12 anliegt und im Zentrum durch einen buchsenförmigen Stamperhalter 18 gehalten wird. Für den Anschluss des Spritzgusswerkzeuges 10 an die Düse der (nicht dargestellten) Spritzgussmaschine ist eine durch das Zentrum der zweiten Spiegelplatte 12 bis in die Kavität 25 reichende Angussbuchse 17 vorgesehen, die sich konisch nach aussen hin öffnet.

Der Angussbuchse 17 gegenüber sind konzentrisch ineinander liegend und (angedeutet durch die Doppelpfeile) relativ zueinander beweglich eine Ausstosshülse 16, eine Stanze 15 und ein Angussausstosser 23 angeordnet. Mit dem Angussausstosser 23 kann der in der inneren Bohrung der Angussbuchse 17 verbleibende Anguss 22 ausgestossen werden. Mit der Stanze 15 wird die zentrale Oeffnung in der gespritzten CD ausgestanzt. Mit der Ausstosshülse 16 schliesslich kann die fertige CD nach dem Oeffnen der Kavität 25 ausgestossen werden.

Der Formring 20 ist im Zentrierring 13 verschiebbar gelagert und wird durch (nicht dargestellte) Federn in Richtung auf die zweite Spiegelplatte 12 gedrückt. Er kann über ein pneumatisch angetriebenes Betätigungselement 24 zurückgezogen werden. Gemäss diesem Stand der Technik liegt der Formring 20 mit seiner Innenseite nicht direkt an der Aussenseite der ersten Spiegelplatte 11 an, sondern ist von dieser durch einen Gleitring 21 getrennt, der konzentrisch auf der Aussenseite der ersten Spiegelplatte 11 in einem dafür vorgesehenen Absatz sitzt. Der Gleitring 21 hat im wesentlichen die Form eines Hohlzylinders und zum Beispiel aus Kupfer. Er bildet damit für den aus Stahl bestehenden Formring 20 und die aus Stahl bestehende erste Spiegelplatte 11 ein thermisch gut leitendes Gleitlager, das im Randbereich der Kavität 25 für eine verbesserte Wärmeabfuhr und damit für verbesserte optische und elektrische Werte im Aussenbereich der CD sorgt. Aufgrund der guten Gleiteigenschaften kann eine relativ enge Passung zwischen dem Gleitring 21 und der ersten Spiegelplatte 11 gewählt werden.

Im Zusammenhang mit einem solchen Spritzgusswerkzeug 10 soll nun an Hand des Ausschnittes A, wie in Figur 1 dargestellt, die Vorrichtung näher erläutert werden. Der Einfachheit halber ist in den Figuren 2a) sowie 3a) und 4a) der Stamper jeweils weggelassen. Er würde sich zwischen der zweiten Spiegelplatte 12 und der Kavität 25 befinden und sich ggf. wenigstens teilweise auch zwischen die zweite Spiegelplatte 12 und den Formring 2 erstrecken.

In Figur 2 a) ist ein Ausschnitt im Bereich des Formringes 2 im Detail dargestellt. In der Darstellung gemäss Figur 2 handelt es sich um eine Lösung, bei welcher nur ein Lager 32 zur Erniedrigung der Gleitreibung zwischen dem Formring 2 und der ersten Spiegelplatte 11 vorgesehen ist. Im wesentlichen befindet sich das Lager (hier ein Kugellager) am gleichen Ort wie der Gleitring 21 in Figur 1, es ist in diesem Fall aber wegen des üblicherweise bei solchen Lagern vorhandenen Spiels zwischen Kugelkäfig und umgebenden Teilen nicht möglich, das Lager 32, respektive insbesondere dessen Kugelkäfig 34, direkt an den Bereich der Kavität angrenzen zu lassen. Entsprechend begrenzt der Formring 2 selber die Kavität 25 im gesamten Randbereich und es gibt in diesem Randbereich eine Zone, in welcher der Formring 2 unmittelbar an die zylindrische Aussenfläche der Spiegelplatte 11 grenzt. Da wie bereits erwähnt die Gleitreibung zwischen Spiegelplatte 11 und Formring 2 herabgesetzt sein sollte, ist diese Zone, bei welcher selbstverständlich ein möglichst kleines Spiel vorhanden sein sollte, nachteilig.

In den Figuren 2 b) und c) sind eine CD 30 respektive eine DVD 31 in einer Schnittdarstellung angegeben, wie sie bei Verwendung einer Spritzgussform gemäss der Figur 2 gebildet wird.

In Figur 3a) ist nun eine Lösung gemäss der Erfindung dargestellt. Es wird eine Kombination aus einem Gleitring 21 und einem weiteren Lager 32 (z.B. Wälzlager) verwendet. Beim weiteren Lager 32 handelt es sich um einen Kugelkäfig 34, in welchem Kugeln 33 derart gefangen sind, dass sie sich drehen können und somit eine leichtgängige relative axiale Bewegung der Spiegelplatte 11 zum Formring 2 erlauben. Die zwei verschiedenen Mittel zur Verringerung der Reibung bei einer Bewegung des Formringes 20 relativ zur ersten Spiegelplatte 11 sind nun koaxial angeordnet, verfügen aber über unterschiedliche Durchmesser. Die Spiegelplatte 11 verfügt über eine gestufte Aussenkontur. Dabei ist bei einem kleinsten Radius im ersten Bereich 35 (erster Absatz), welcher der Kavität 25 zugewandt ist, der Gleitring 21 diesen Radius umschliessend angeordnet. Bei einem anfolgenden etwas grösseren Radius im zweiten Bereich 36 (zweiter Absatz) ist das weitere Lager 32 diesen grösseren Radius umschliessend angeordnet.

Entsprechend verfügt der Formring 2 über eine angepasste gestufte Innenkontur, wobei in jenem Bereich, in welchem der Formring 2 die Kavität 25 in radialer Richtung abschliesst, ein kleinerer Radius c von 120 mm vorgesehen ist, und sich dieser Radius in einer Stufe auf einen grösseren Radius b von 130 mm erweitert. Der Formring 2 verfügt über einen Aussendurchmesser von circa 160 mm.

Um eine möglichst genaue Passung zwischen den einzelnen Elementen zu haben, wird nun der Gleitring 21 mit einer Dicke d in radialer Richtung von 0.5 mm ausgebildet (die Dicke vom Gleitring ist zwecks besserer Visualisierung in den Figuren vergrössert dargestellt). Es kann sich beim Material des Gleitringes 21, welcher im wesentlichen die Form eines Hohlzylinders hat, um Kupfer handeln. Er bildet damit für den aus Stahl bestehenden Formring 20 und die aus Stahl bestehende erste Spiegelplatte 11 in der entscheidenden Zone, nämlich im Randbereich der Kavität, ein thermisch gut leitendes Gleitlager, das in dieser entscheidenden Zone für eine verbesserte Wärmeabfuhr und damit für verbesserte optische und elektrische Werte im Aussenbereich der CD respektive DVD sorgt. Aufgrund der guten Gleiteigenschaften kann eine relativ enge Passung zwischen dem Gleitring 21 und der ersten Spiegelplatte 11 gewählt werden. In Anpassung an die axiale Ausdehnung der ersten Stufe 35 verfügt der Gleitring 21 über eine Höhe f in axialer Richtung von circa 6 mm.

Die der Kavität zugewandte obere Kante des Gleitringes 21 kann entweder plan ausgebildet sein, und somit eine Fortsetzung der Fläche der Spiegelplatte 11 bilden. Dann werden Formlinge 30, 31 wie in Figur 2 b) respektive d) erzeugt. In Figur 3 ist die Möglichkeit dargestellt, den Gleitring 21 mit einer Anschrägung 26 zu versehen. Beim Formgebungsprozess entsteht so beim Formling 30 respektive 31 eine Anphasung 27, was zu einer "weicheren" Kante führt. Entsprechende Formlinge sind in den Figuren 3 b) und c) dargestellt.

Eine andere Möglichkeit ist Figur 4 dargestellt. Hier verfügt die Oberkante vom Gleitring 21 über eine umlaufende Vertiefung 28. Entsprechend entsteht bei der Formgebung ein Formling 30 respektive 31, welcher im Kantenbereich über eine lokale umlaufende Erhebung 29 verfügt, welche als Kratzschutz dienen kann. Diese Situation ist in den Figuren 4 b) und c) dargestellt.

Dies zeigt, dass die Oberkante des Gleitringes 21 unterschiedlich und der gewünschten Endform des Formlinges angepasst strukturiert werden kann, je nachdem, wie der Kantenbereich des Formlinges ausgestaltet sein soll. Dabei sind runde und eckige Formen oder Kombinationen davon möglich, und es sogar möglich, dem Umfang des Gleitringes entlang den Kantenbereich unterschiedlich auszugestalten.

Somit wird der Gleitring 21 ausschliesslich in jenem Bereich angeordnet, wo seine Vorteile entscheidend sind, nämlich im Bereich, welcher an die Kavität 25 grenzt. Dort sind einerseits möglichst geringe Spaltbreiten gewünscht und andererseits eine möglichst gute Wärmeleitfähigkeit zwischen Formring und Spiegelplatte, um differenziellen thermischen Ausdehnungen dieser Elemente vorzubeugen. Ausserdem eröffnet sich dort die Möglichkeit, die weiter oben genannte Strukturierung in der Form des Kantenbereiches vom Formling über eine korrespondierende Strukturierung des Gleitringes zu bewirken.

Um nun aber die eigentliche Führungsfunktion zwischen Formring 2 und Spiegelplatte 11 nicht dem Gleitring 21 ausschliesslich aufzubürden, wird in einem hinteren Bereich die Führung über das weitere Lager 32 gewährleistet. Dieses ist in der zweiten Stufe 36 der Spiegelplatte 11 angeordnet, diese zweite Stufe verfügt über eine Höhe g in axialer Richtung von circa 15 bis 20 mm. Der Innendurchmesser dieser zweiten Stufe beträgt 124 mm, und um entsprechend möglichst gut mit der Innenkontur des Formringes 2 zusammenzuwirken, hat das Lager eine Dicke e in radialer Richtung von circa 3 mm. Das Lager 32 kann eine Höhe in axialer Richtung aufweisen, welche der Höhe g der Stufe 36 der ersten Spiegelplatte 11 entspricht, es ist aber wie in Figur 3 respektive 4 dargestellt auch möglich, das Lager 32 etwas höher auszubilden.

Die gestufte Anordnung von Gleitring 21 und Lager 32 führt dazu, dass, wenn der Formring 2 in einer Darstellung gemäss Figur 3 oder 4 von oben auf die Spiegelplatte aufgesetzt wird, wie dies bei Montage oder Wartung häufig der Fall ist, zunächst das Lager 32 von der Aussenkontur des zweiten Bereiches 36 erfasst wird, dies bevor überhaupt die Möglichkeit besteht, dass der kritische Bereich, nämlich der Gleitring 21 respektive die Spiegelplatte 11 im Kantenbereich zur Kavität respektive der Formring 2. im Kantenbereich zur Kavität 25 in Kontakt kommen können. Diese Bereiche werden erst zusammengeführt, wenn bereits ein teilweises Einführen des Lagers 32 stattgefunden hat, und dieses somit bereits eine Führung dieser Elemente relativ zueinander sicherstellt. Somit wird verhindert, dass die entscheidenden Kantenbereiche in der Randzone der Kavität 25 bei Wartung und/oder Montage beschädigt werden können.

Zusammenfassend ergeben sich durch die synergistische Kombination von Gleitring und Lager unter anderem folgende Vorteile:
- Verbesserte Gleiteigenschaften zwischen Spiegelplatte und Formring durch Aufteilung von Führung auf zwei unterschiedliche Mittel mit unterschiedlichem Verhalten.
- Genaue Passung im Kantenbereich der Kavität durch Gleitring.
- Gute Wärmeleitfähigkeit im Kantenbereich der Kavität durch Gleitring.
- Verbesserte Führung insbesondere bei Montage respektive Wartung durch relative Anordnung von Gleitring und Lager, damit verbundenen reduziertes Verletzungsrisiko der entscheidenden Kantenbereiche.
- Gleitring variabel wählbar entsprechend gewünschter Aussenkontur vom Formling, leicht ersetzbar.
- Bei verschlissener Spritzgussform müssen häufig die Spiegelplatten heruntergeschliffen und poliert werden, und bei verschlissener Kante muss auch diese bearbeitet werden, wodurch sich zum Beispiel auch der Aussendurchmesser der Spiegelplatte ändern kann. Die Verwendung des Gleitringes erlaubt in dieser Situation ein einfaches Ersetzen nur dieses Elementes, und der komplexere Formring kann beibehalten werden respektive muss nicht überarbeitet werden.
- Die Führung des Wälzlagers ist im wesentlichen spielfrei. Im Gegensatz dazu muss ein Gleitring stets ein gewisses Spiel haben, um sich nicht festzubeissen bei der Bewegung. Durch die kombinierte Verwendung dieser beiden Elemente, das heisst aufgrund der Tatsache, dass die Führung des Wälzlagers nahezu perfekt ist, kann das Spiel beim Gleitring nochmals wesentlich reduziert werden, ohne dass dabei das Risiko eines Festbeissens entsteht.

### BEZUGSZEICHENLISTE

- 10: Spritzgusswerkzeug
- 11,12: Spiegelplatte (mirror block)
- 13,14: Zentrierring (centering ring)
- 15: Stanze (punch)
- 16: Ausstosshülse (ejector sleeve)
- 17: Angussbuchse (sprue bush)
- 18: Stamperhalter (stamper holder)
- 19: Stamper
- 20: Formring (form or venting ring)
- 21: Gleitring
- 22: Anguss
- 23: Angussausstosser
- 24: Betätigungselement (Formring)
- 25: Kavität
- 26: Anschrägung
- 27: Anphasung
- 28: Vertiefung (umlaufend)
- 29: Kratzschutz
- 30: CD
- 31: DVD
- 32: Lager
- 33: Kugeln
- 34: Kugelkäfig
- 35: erster axialer Abschnitt von 11
- 36: zweiter axialer Abschnitt von 11

## Patentansprüche

1. Spritzgusswerkzeug (10) fiir die Herstellung von scheibenförmigen Informationsträgern, insbesondere in Form von CDs (30) und/oder DVDs (31), welches Spritzgusswerkzeug (10) zur Bildung einer Kavität (25) eine erste und eine zweite Spiegelplatte (11 bzw. 12) umfasst, die einander gegenüberliegen und zum Oeffnen und Schliessen der Form relativ zueinander beweglich sind, sowie einen Formring (20), welcher die erste Spiegelplatte (11) konzentrisch umschliesst und die Kavität (25) zum äusseren Rand hin abschliesst und relativ zur ersten Spiegelplatte (11) beweglich ist, wobei zwischen der ersten Spiegelplatte (11) und dem sie umschliessenden Formring (20) Mittel zur Verringerung der Reibung bei einer Bewegung des Formringes (20) relativ zur ersten Spiegelplatte (11) vorgesehen sind,
**dadurch gekennzeichnet, dass**
die Mittel einen konzentrisch zwischen der ersten Spiegelplatte (11) und dem sie umschliessenden Formring (20) angeordneten Gleitring (21) sowie wenigstens ein weiteres konzentrisch zwischen der ersten Spiegelplatte (11) und dem sie umschliessenden Formring (20) angeordnetes Lager (32) umfassen.

2. Spritzgusswerkzeug nach Anspruch 1, **dadurch gekennzeichnet, dass** der Gleitring (21) in einem an die Kavität (25) angrenzenden Bereich angeordnet ist, und dass das weitere Lager (32) in einem axial von der Kavität (25) abgewandten und nicht an die Kavität (25) angrenzenden Bereich angeordnet ist.

3. Spritzgusswerkzeug nach einem der Ansprüche 1 oder 2, **dadurch gekennzeichnet, dass** der Gleitring (21) und das weitere Lager (32) radial versetzt angeordnet sind.

4. Spritzgusswerkzeug nach Anspruch 3, **dadurch gekennzeichnet, dass** die erste Spiegelplatte (11) einen ersten, der Kavität (25) zugewandten axialen Abschnitt (35) mit einem ersten Radius, und einen zweiten, der Kavität (25) abgewandten axialen Abschnitt (36) mit einem zweiten Radius aufweist, wobei der erste Radius kleiner ist als der zweite Radius, und wobei der Gleitring (21) um den ersten axialen Abschnitt (35) angeordnet ist und das weitere Lager (32) um den zweiten axialen Abschnitt (36) angeordnet ist.

5. Spritzgusswerkzeug nach Anspruch 4, **dadurch gekennzeichnet, dass** der Gleitring (21) einen Durchmesser (c) aufweist, welcher im wesentlichen dem Aussendurchmesser der Kavität (25) entspricht, und dass die Dicke (d) des Gleitringes (21) geringer ist als die Differenz zwischen dem ersten Radius und dem zweiten Radius.

6. Spritzgusswerkzeug nach Anspruch 5, **dadurch gekennzeichnet, dass** der Gleitring (21) eine Dicke (d) im Bereich von 0.25-2 mm, bevorzugt von 0.35-1 mm aufweist, und dass die Differenz zwischen dem ersten Radius und dem zweiten Radius im Bereich von 0.5-10 mm, bevorzugt im Bereich von 1-7.5 mm liegt.

7. Spritzgusswerkzeug nach einem der Ansprüche 4-6, **dadurch gekennzeichnet, dass** der erste axiale Abschnitt (35) eine Höhe (f) aufweist, welche geringer ist als die Höhe (g) des zweiten axialen Abschnitts (36).

8. Spritzgusswerkzeug nach einem der Ansprüche 4 - 7, **dadurch gekennzeichnet, dass** der erste axiale Abschnitt (35) eine Höhe (f) im Bereich von 2.5-15mm, bevorzugt im Bereich von 5-10 mm aufweist, und der zweite axialer Abschnitt (36) eine Höhe (g) im Bereich von 10-30 mm, bevorzugt im Bereich von 15-20 mm aufweist.

9. Spritzgusswerkzeug nach einem der vorhergehenden Ansprüche, **dadurch gekennzeichnet, dass** es sich beim weiteren Lager (32) um Wälzlager wie z.B. ein Kugellager handelt, insbesondere bevorzugt bestehend aus einem Kugelkäfig (34) mit darin gelagerten Kugeln (33).

10. Spritzgusswerkzeug nach einem der vorhergehenden Ansprüche, **dadurch gekennzeichnet, dass** das weitere Lager (32) eine Dicke (e) im Bereich von 1-5mm, bevorzugt im Bereich von 1.5-3.5 mm aufweist.

11. Spritzgusswerkzeug nach einem der vorhergehenden Ansprüche, **dadurch gekennzeichnet, dass** der Gleitring (21) aus einem die Gleitreibung herabsetzenden Material besteht, insbesondere bevorzugt aus Kupfer, einer Kupferlegierung wie Bronze oder auch aus einem Kunststoffmaterial wie Teflon.

12. Spritzgusswerkzeug nach einem der vorhergehenden Ansprüche, **dadurch gekennzeichnet, dass** die erste Spiegelplatte (11) die Kavität (25) mit einer im wesentlichen ebenen Fläche begrenzt, und dass der Gleitring (21) mit seiner der Kavität (25) zugewandten Stirnseite bündig an die ebene Fläche der ersten Spiegelplatte (11) anschliesst und diese nach aussen hin vergrössert.

13. Spritzgusswerkzeug nach einem der vorhergehenden Ansprüche, **dadurch gekennzeichnet, dass** die erste Spiegelplatte (11) die Kavität (25) mit einer im wesentlichen ebenen Fläche begrenzt, und dass der Gleitring (21) an seiner der Kavität (25) zugewandten Stirnseite eine Anschrägung (26) aufweist, derart, dass der in der Kavität (25) hergestellte Informationsträger (30, 31) an seiner Aussenkante eine Anphasung (27) aufweist, und/oder dass der Gleitring (21 c) an seiner der Kavität (25) zugewandten Stirnseite eine umlaufende Vertiefung (28) aufweist, derart, dass der in der Kavität (25) hergestellte Informationsträger (30, 31) an seiner Aussenkante einen erhöhten, ringförmigen Kratzschutz (29) aufweist.

14. Spritzgusswerkzeug nach einem der vorhergehenden Ansprüche, **dadurch gekennzeichnet, dass** der Gleitring (21) auf der ersten Spiegelplatte (11) sitzt.

15. Spritzgusswerkzeug nach einem der vorhergehenden Ansprüche, **dadurch gekennzeichnet, dass** der Gleitring (21) und/oder das weitere Lager (32) mit einer reibungsvermindernden Beschichtung versehen ist.

## Claims

1. Injection molding tool (10) for the production of disc shaped information carriers, in particular in the form of CD's, (30) and/or DVD's (31), which injection molding tool (10) comprises a first and a second mirror block (11, 12) for the formation of a cavity (25), which are located opposite to each other and which are movable relative to each other for the opening and the closure of the form, as well as a form ring (20) which encloses the first mirror block (11) concentrically and which borders the cavity (25) towards the outer edge, and which is movable relative to the first mirror block (11), wherein between the first mirror block (11) and the form ring (20) enclosing it means are provided for the reduction of friction during a motion of the form ring (20) relative to the first mirror block (11),
wherein
the means comprise a sliding ring (21) located concentrically between the first mirror block (11) and the form ring (20) enclosing it, as well as at least one further bearing (32) located concentrically between the first mirror block (11) and the form ring (20) enclosing it.

2. Injection molding tool according to claim 1, wherein the sliding ring (21) is located in a region adjacent to the cavity (25), and wherein the further bearing (32) is located in a region axially farther from the cavity (25) and not adjacent to the cavity (25).

3. Injection molding tool according to one of the claims 1 or 2, wherein the sliding ring (21) and the further bearing (32) are located offset in a radial direction.

4. Injection molding tool according to claim 3, wherein the first mirror block (11) comprises a first axial section (35) which is facing the cavity (25) and which has a first radius, and comprises a second axial section (36) which is farther from the cavity (25) and which has a second radius, wherein the first radius is smaller than the second radius, and wherein the sliding ring (21) is located around the first axial section (35) and wherein the further bearing (32) is located around the second axial section (36).

5. Injection molding tool according to claim 4, wherein the sliding ring (21) has a diameter (c) which corresponds substantially to the outer diameter of the cavity (25), and wherein the thickness (d) of the sliding ring (21) is smaller than the difference between the first radius and the second radius.

6. Injection molding tool according to claim 5, wherein the sliding ring (21) has a thickness (d) in the range of 0.25-2 mm, preferably of 0.35-1 mm, and wherein the difference between the first radius and the second radius is in the range of 0.5-10 mm, preferably in the range of 1-7.5 mm.

7. Injection molding tool according to any of the claims 4-6, wherein the first axial section (35) has a height (f), which is smaller than the height (g) of the second axial section (36).

8. Injection molding tool according to one of the claims 4-7, wherein the first axial section (35) has a height (f) in the range of 2.5-15 mm, preferably in the range of 5-10 mm, and wherein the second axial section (36) has a height (g) in the range of 10-30 mm, preferably in the range of 15-20 mm.

9. Injection molding tool according to one of the preceding claims, wherein the further bearing (32) is a roller bearing like e.g. a ball bearing, in particular preferably consisting of a ball cage (34) with balls (33) supported therein.

10. Injection molding tool according to any of the preceding claims, wherein the further bearing (32) has a thickness (e) in the range of 1-5 mm, preferably in the range of 1.5-3.5 mm.

11. Injection molding tool according to any of the preceding claims, wherein the sliding ring (21) is made of a material reducing the sliding friction, in particular of copper, a copper alloy like bronze, or also of a plastic material like Teflon.

12. Injection molding tool according to any of the preceding claims, wherein the first mirror block (11) borders the cavity (25) with a substantially planar surface, and wherein the sliding ring (21) with its front surface facing the cavity (25) is flush with the planar surface of the first mirror block (11) and enlarges it radially outwards.

13. Injection molding tool according to any of the preceding claims, wherein the first mirror block (11) borders the cavity (25) with a substantially planar surface, and wherein the sliding ring (21) in its front portion facing the cavity (25) is provided with a bevel (26), such that the information carrier (30,31) produced in the cavity (25) provides a chamfer (27) on its outer edge, and/or that the sliding ring (21c) on its front edge facing the cavity (25) comprises a circumferential recess (28), such that the information carrier (30,31) produced in the cavity (25) on its outer edge is provided with a protruding ring-like scratch protection (29).

14. Injection molding tool according to any of the preceding claims, wherein the sliding ring (21) sits on the first mirror block (11).

15. Injection molding tool according to any of the preceding claims, wherein the sliding ring (21) and/or the further bearing (32) is provided with a coating for reducing friction.

## Revendications

1. Outil de moulage par injection (10) pour la fabrication de supports d'information en forme de disques, notamment en forme de CD (30) et/ou de DVD (31), lequel outil de moulage par injection (10) comprend, pour la formation d'une cavité (25), une première et une deuxième plaque miroir (11, respectivement 12), qui sont disposées l'une en face de l'autre et qui peuvent se déplacer l'une par rapport à l'autre pour l'ouverture et la fermeture du moule, ainsi qu'un anneau de moule (20) qui entoure concentriquement la première plaque miroir (11) et qui ferme la cavité (25) vers le bord extérieur et qui peut se déplacer par rapport à la première plaque miroir (11), des moyens pour réduire le frottement dans le cas d'un déplacement de l'anneau de moule (20) par rapport à la première plaque miroir (11) étant prévus entre la première plaque miroir (11) et l'anneau de moule (20) qui l'entoure,
**caractérisé en ce que**
les moyens comprennent un anneau coulissant (21) disposée concentriquement entre la première plaque miroir (11) et l'anneau de moule (20) qui l'entoure, ainsi qu'au moins un autre palier (32) disposé concentriquement entre la première plaque miroir (11) et l'anneau de moule (20) qui l'entoure.

2. Outil de moulage par injection selon la revendication 1, **caractérisé en ce que** l'anneau coulissant (21) est disposée dans une région adjacente à la cavité (25), et **en ce que** le palier supplémentaire (32) est disposé dans une région opposée axialement à la cavité (25) et non adjacente à la cavité (25).

3. Outil de moulage par injection selon l'une quelconque des revendications 1 ou 2, **caractérisé en ce que** l'anneau coulissant (21) et le palier supplémentaire (32) sont disposés de manière décalée radialement.

4. Outil de moulage par injection selon la revendication 3, **caractérisé en ce que** la première plaque miroir (11) présente une première portion axiale (35) tournée vers la cavité (25), avec un premier rayon, et une deuxième portion axiale (36) opposée à la cavité (25), avec un deuxième rayon, le premier rayon étant inférieur au deuxième rayon, et l'anneau coulissant (21) étant disposée autour de la première portion axiale (35) et le palier supplémentaire (32) étant disposé autour de la deuxième portion axiale (36).

5. Outil de moulage par injection selon la revendication 4, **caractérisé en ce que** l'anneau coulissant (21) présente un diamètre (c) qui correspond essentiellement au diamètre extérieur de la cavité (25), et **en ce que** l'épaisseur (d) de l'anneau coulissant (21) est inférieure à la différence entre le premier rayon et le deuxième rayon.

6. Outil de moulage par injection selon la revendication 5, **caractérisé en ce que** l'anneau coulissant (21) présente une épaisseur (d) de l'ordre de 0,25 à 2 mm, de préférence de 0,35 à 1 mm, et **en ce que** la différence entre le premier rayon et le deuxième rayon est de l'ordre de 0,5 à 10 mm, de préférence de l'ordre de 1 à 7,5 mm.

7. Outil de moulage par injection selon l'une quelconque des revendications 4 à 6, **caractérisé en ce que** la première portion axiale (35) présente une hauteur (f) qui est inférieure à la hauteur (g) de la deuxième portion axiale (36).

8. Outil de moulage par injection selon l'une quelconque des revendications 4 à 7, **caractérisé en ce que** la première portion axiale (35) présente une hauteur (f) de l'ordre de 2,5 à 15 mm, de préférence de l'ordre de 5 à 10 mm, et la deuxième portion axiale (36) présente une hauteur (g) de l'ordre de 10 à 30 mm, de préférence de l'ordre de 15 à 20 mm.

9. Outil de moulage par injection selon l'une quelconque des revendications précédentes, **caractérisé en ce que** le palier supplémentaire (32) est un palier de roulement comme par exemple un roulement à billes, notamment de préférence constitué d'une cage à bille (34) avec des billes (33) disposées dedans.

10. Outil de moulage par injection selon l'une quelconque des revendications précédentes, **caractérisé en ce que** le palier supplémentaire (32) présente une épaisseur (e) de l'ordre de 1 à 5 mm, de préférence de l'ordre de 1,5 à 3,5 mm.

11. Outil de moulage par injection selon l'une quelconque des revendications précédentes, **caractérisé en ce que** l'anneau coulissant (21) se compose un matériau diminuant le frottement de glissement, notamment de préférence de cuivre, d'un alliage de cuivre comme du bronze ou aussi d'un matériau en plastique comme du téflon.

12. Outil de moulage par injection selon l'une quelconque des revendications précédentes, **caractérisé en ce que** la première plaque miroir (11) limite la cavité (25) avec une surface essentiellement plane et **en ce que** l'anneau coulissant (21) se raccorde avec son côté frontal tourné vers la cavité (25) en affleurement avec la surface plane de la première plaque miroir (11) et augmente sa dimension vers l'extérieur.

13. Outil de moulage par injection selon l'une quelconque des revendications précédentes, **caractérisé en ce que** la première plaque miroir (11) limite la cavité (25) avec une surface essentiellement plane et **en ce que** l'anneau coulissant (21) présente sur son côté frontal tourné vers la cavité (25) un chanfrein (26) de telle sorte que le support d'information (30, 31) fabriqué dans la cavité (25) présente sur son bord extérieur un biseautage (27) et/ou **en ce que** l'anneau coulissant (21c) présent sur son côté frontal tourné vers la cavité (25) un renfoncement périphérique (28), de telle sorte que le support d'information (30, 21) fabriqué dans la cavité (25) présent sur son bord extérieur une protection accrue contre les rayures (29), de forme annulaire.

14. Outil de moulage par injection selon l'une quelconque des revendications précédentes, **caractérisé en ce que** l'anneau coulissant (21) repose sur la première plaque miroir (11).

15. Outil de moulage par injection selon l'une quelconque des revendications précédentes, **caractérisé en ce que** l'anneau coulissant (21) et/ou le palier supplémentaire (32) sont pourvus d'un revêtement réduisant le frottement.
